Europäisches Patentamt

European Patent Office

Office européen des brevets

(19)

(11) Publication number: **0 058 043**
**B1**

(12) **EUROPEAN PATENT SPECIFICATION**

(45) Date of publication of patent specification: **04.12.85**

(51) Int. Cl.⁴: **B 60 G 15/04, F 16 F 13/00**

(21) Application number: **82300535.0**

(22) Date of filing: **02.02.82**

(54) **Suspension strut assembly.**

(30) Priority: **03.02.81 US 231265**
**31.07.81 US 288856**

(43) Date of publication of application:
**18.08.82 Bulletin 82/33**

(45) Publication of the grant of the patent:
**04.12.85 Bulletin 85/49**

(84) Designated Contracting States:
**BE CH DE FR GB IT LI NL SE**

(56) References cited:
**DE-A-2 553 890**
**GB-A-1 238 641**
**US-A-1 510 017**
**US-A-3 039 757**
**US-A-3 372 947**
**US-A-3 417 986**
**US-A-3 480 268**

(73) Proprietor: **Paton, H. Neil**
**2521 W. Montlake Place East**
**Seattle Washington (US)**

(73) Proprietor: **Skilling, John B.**
**539 McGilvra Boulevard East**
**Seattle Washington (US)**

(72) Inventor: **Sitko, James Robert**
**5431 Vandewater**
**Waterford Michigan 48095 (US)**

(74) Representative: **Madgwick, Paul Roland et al**
**Ladas & Parry Isartorplatz 5**
**D-8000 München 2 (DE)**

Courier Press, Leamington Spa, England.

## Description

The present invention relates to suspension strut assemblies for use in vehicle suspension systems and more particularly to such struts which incorporate fixed and variable rate spring means in combination with friction damping apparatus.

Strut-type suspension systems are being incorporated into more and more of our present-day motor vehicles, in order to accommodate the demands for lighter more compact fuel-efficient vehicles. One common type of strut suspension utilizes a MacPherson strut, which incorporates conventional constant-rate helical coil springs in conjunction with hydraulic shock-damping means.

Such struts have many disadvantages, in spite of their compactness and relative weight saving over prior conventional suspension systems, such as for example high replacement costs, numerous seals for the hydraulic damping arrangement, binding or sticking of internal bearings, etc. Additionally, because these struts employ substantially constant rate helical coil springs, vehicle ride frequency, which is a function of both mass and spring rate, may only be optimized for one particular load condition. Under any other load condition, the ride frequency must be compromised and so is less than optimum. This compromise is becoming increasingly significant, as the total weights of vehicles decrease. While previously a conventional passenger car usually weighed approximately 1,800—2,300 Kg (four to five thousand pounds) present-day vehicles are more likely to fall within the range from 900—1,400 Kg (two to three thousand pounds). With the prior heavier vehicles, the difference between operating the vehicle lightly loaded, such as with only the driver, versus heavily loaded, such as with four to six people plus luggage, may have represented a relatively small percentage increase in load on the suspension system. However, the same difference in loading represents a substantially more significant percentage increase with present-day lightweight vehicles. Hence, the load range of present-day vehicles as a function of vehicle weight has increased significantly. Because ride frequency is a function of both the spring rate and sprung mass, it is substantially more difficult, if not impossible, to provide a comfortable vehicle ride at both light load levels and full load levels in today's light weight vehicles, particularly with conventional coil spring suspension systems.

Thus it can be seen that present proposals for suspension systems have many drawbacks and it would therefore be highly advantageous to develop new designs to solve these significant problems.

A suspension strut comprising a load-bearing assembly which can extend and contract reciprocatively along its main axis from a design position toward respective rebound and jounce positions is known from US—A—3372947; the load-bearing assembly is supported by a variable-rate resilient force generated by resilient means. This known form of strut does not incorporate means providing damping of the kind considered necessary for achievement of the desired operating behaviour of suspension struts, however.

According to the present invention, a suspension strut for a vehicle suspension system comprises an elongated load-bearing assembly, arranged to extend and contract reciprocatively along its longitudinal axis from a design position toward a rebound position and jounce position, respectively, and resilient means surrounding the load-bearing assembly and acting between sprung and unsprung parts of the suspension system, and is characterised in that the resilient means provide a variable rate resilient force, for supporting the load-bearing assembly, and that a frictional damping assembly including damping means and operator means surrounding the load-bearing assembly are provided, wherein the operator means are arranged to receive a resilient force from the resilient means and apply a component of that resilient force to the damping means as a normal force urging the damping means inwardly into contact with the load-bearing assembly, so as to apply a frictional damping force to the load-bearing assembly during extension and contraction thereof.

A suspension strut according to the invention has a number of important advantages. For instance, it provides a suspension system which does not require seals for hydraulic damping. Also, the invention eliminates the need for constant-rate metal coil springs, which limit the range of optimized loads which vehicles can accommodate.

A strut-type suspension of the invention can be provided at reduced cost and can replace current suspension systems, so as to achieve optimized vehicle ride frequency over a wide range of loads.

The improved strut of the present invention, for use in a suspension system of a motor vehicle can comprise a plurality of rubber spring members positioned in a stacked relationship; a first elongated tubular member extending through the stack of rubber springs and having support means engaging one end of the stacked rubber springs; a second elongated tubular member disposed in substantially coaxial relationship with the first tubular member so as to be telescopically movable with respect thereto; friction damping means and actuating means operative to urge the friction damping means into engagement with one of the first and second tubular members in response to an axially-directed loading on the strut, whereby the damping means may operate to create a friction drag resisting telescopic movement of the first and second tubular members, the rubber springs being operative to support resiliently a portion of the motor vehicle so as to provide a desired ride frequency over substantially the full vehicle load range.

The following embodiments of the suspension strut assembly of the invention are shown by way of example in the accompanying drawings and are described in the accompanying specification by way of illustration only.

FIGURE 1 is a fragmentary elevation view of a suspension strut assembly in accordance with the present invention shown in operative relationship to a portion of a front wheel suspension system for a motor vehicle.

FIGURE 2 is a section view of the suspension strut assembly shown in FIGURE 1, the section being taken along a radial plane extending along the longitudinal axis thereof.

FIGURE 3 is a section view of the friction damping assembly incorporated in the strut assembly of the present invention, the section being taken along the line 3—3 of FIGURE 2.

FIGURE 4 is a schematic diagram of the strut assembly of FIGURES 1—3 showing the operative relationship of the spring biasing means incorporated therein.

FIGURE 5 is a graph showing a representative plot of load versus deflection for both coil springs and rubber springs;

FIGURE 6 is a view similar to that of FIGURE 2 but showing another embodiment of the present invention.

FIGURE 7 is a view similar to that of FIGURE 4 but illustrating the operative relationship of the springs for the embodiment of FIGURE 6.

FIGURE 8 is a view similar to that of FIGURE 6 but showing yet another embodiment of the present invention.

FIGURE 9 is a fragmentary elevation view of another embodiment of the present invention using rubber springs.

FIGURE 10 is a section view of the suspension strut assembly of FIGURE 9 taken substantially along line 10—10 of FIGURE 9.

## Description of the Preferred Embodiments

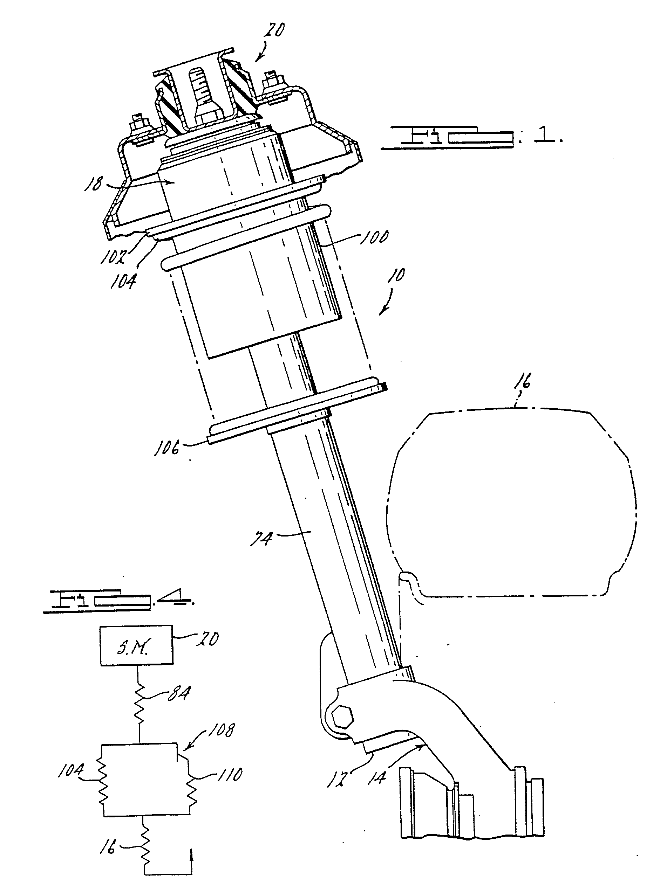

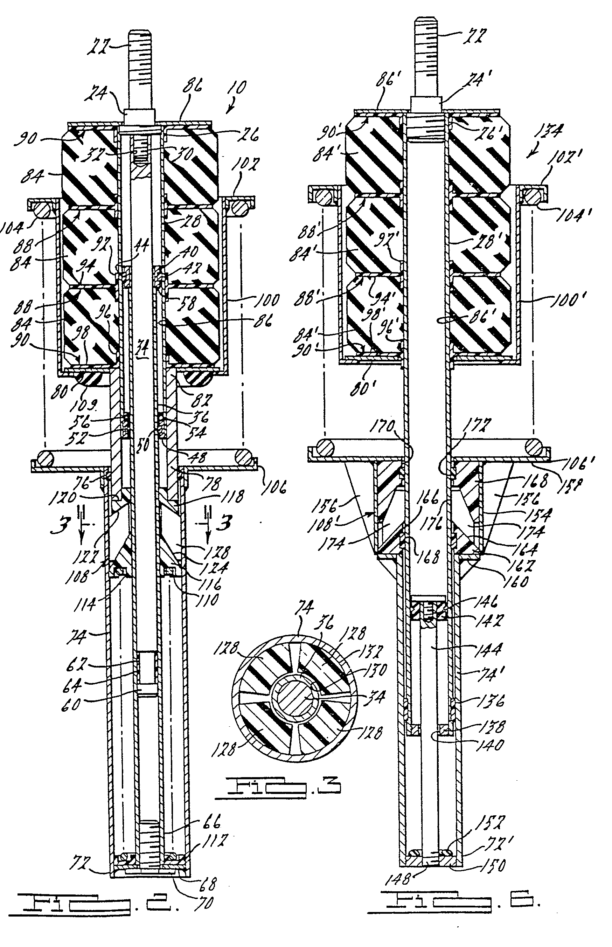

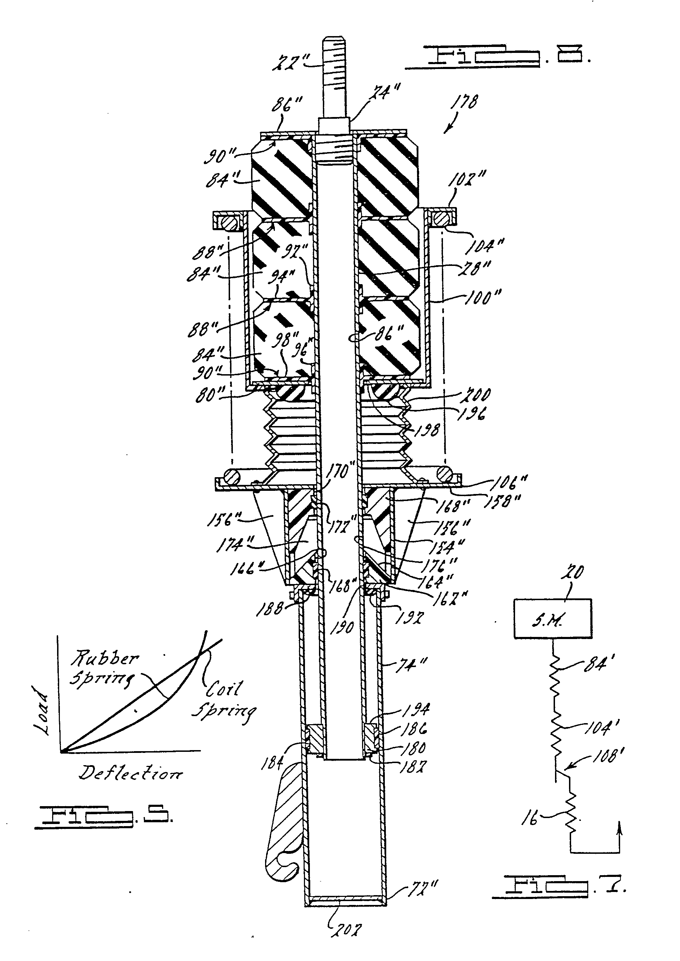

Referring now to the drawings and in particular to FIGURES 1 through 3, there is illustrated a portion of the suspension system for supporting the front or steering wheel of a motor vehicle and which illustrates an improved suspension strut 10 in accordance with the present invention having one end 12 thereof secured to the steering knuckle 14 of the vehicle which in turn rotatably supports a vehicle wheel 16. The upper end 18 of the strut is secured to a suitable mounting assembly 20 associated with the vehicle body assembly. As shown both the steering knuckle attachment arrangement and the body mounting assembly are of conventional design and typical of suspension systems designed to accommodate strut suspensions of MacPherson type.

As best seen with reference to FIGURE 2, strut 10 has a threaded stud 22 provided at the upper end thereof which is adapted for securing the strut to mounting assembly 20 of the motor vehicle body. The lower end of stud 22 is provided with an enlarged diameter collar portion 24 adapted to threadably engage one end 26 of an elongated hollow tubular member 28 of generally cylindrical cross sectional shape. A second threaded projection 30 extends downwardly from collar portion 24 and into a threaded bore 32 provided in the upper end of an elongated cylindrical guide rod member 34 which is positioned substantially coaxially within hollow tubular member 28.

A second elongated hollow tubular member 36 of generally cylindrical cross sectional shape is also provided being axially movably telescopically received between rod member 34 and upper tubular member 28. The upper end of this second tubular member 36 has a bearing assembly fitted thereon comprising an annular ring 40 having a suitable low friction bearing 42 seated within a radially outwardly opening groove 44 provided thereon. Similarly, the lower end of tubular member 28 also has a bearing assembly fitted thereon comprising an annular ring 48 having a suitable low friction bearing 50 seated within a radially inwardly facing groove 52 provided thereon. The outer sidewall surface of tubular member 36 and the inner sidewall surface of tubular member 28 will each be suitably polished so as to provide a smooth low friction surface for sliding engagement by bearings 50 and 42 respectively which will operate to support and guide sliding telescopic movement between tubular members 28 and 36. Annular rings 40 and 48 may be secured to respective tubular members 36 and 28 in any suitable manner such as by threading, welding, or by use of a suitable fastener such as a snap ring or the like. Preferably bearings 42 and 50 will both be fabricated from a suitable polymeric composition such as for example a filled teflon material available from Dixon Corporation, Bristol, Rhode Island under the trademark of RULON.

A rebound pad 54 preferably of rubber is also provided seated on the upper surface 56 of the lower bearing assembly which is adapted to provide a cushioned stop engageable with lower surface 58 of ring 40 of the upper bearing assembly so as to limit the maximum extension of strut 10 and to prevent complete withdrawal of tubular member 36 from within tubular member 28.

The lower end 60 of guide rod member 34 is provided with an axially elongated groove 62 within which an annular bearing member 64 is fitted. The inner sidewall surface of tubular member 36 will preferably also be suitably honed and polished so as to provide a smooth surface for sliding engagement with bearing member 64. Preferably, bearing member 64 will also be fabricated from a suitable low friction, long wearing polymeric composition such as for example RULON.

The lower end 66 of tubular member 36 is fixedly secured to an end plate 68 by means of a suitable threaded fastener such as bolt 70. End plate 68 is in turn secured to and closes off one end 72 of another elongated hollow tubular member 74 which also extends in substantially coaxial relationship therewith. A suitable low friction, long wearing polymeric composition bearing 76 is also provided being seated within an annular groove provided adjacent the upper end of tubular member 74 which slidingly engages the outer sidewall of an elongated hollow tubular member 78 which telescopically receives the lower end of tubular member 28 extending thereinto from the upper end thereof.

An annular flange member 80 is secured to the upper end 82 of tubular member 78 which operates to support the lower end of a plurality of generally cylindrically shaped substantially identical rubber springs 84. Each of rubber springs 84 has a generally cylindrical central bore 86 extending therethrough through which tubular member 28 extends. A similar annular flange member 86 secured to collar portion 24 of stud 22 overlies and supports the upper end of the plurality of rubber springs.

While various types of rubber springs may be utilized in this application, it is believed that a non-collapsing fabric reinforced type such as what is referred to as a Marshmellow type available from Firestone Rubber Company will provide satisfactory operation.

In order to facilitate relative movement of each of the rubber springs 84 with respect to each other as well as tubular member 28 during axial movement of strut 10, a plurality of bearing elements are provided, a pair of substantially identical elements 88 being positioned between each of the spring members 84 and a pair of substantially identical elements 90 being positioned between the upper and lower support flanges 80 and 86 and rubber springs 84. Elements 88 each include a relatively short axially extending cylindrical flange portion 92 surrounding and slidably engaging tubular member 28 and having an annular flange portion 94 integrally formed therewith extending radially outwardly intermediate the ends thereof and between adjacent rubber springs 84. Upper and lower bearing elements 90 also each have a cylindrical flange portion 96 slidably engaging tubular member 28 and an integrally formed radially extending flange portion 98 extending between plate member and the rubber spring element. Preferably each of these bearing elements 88 and 90 will be fabricated from a suitable low friction, low wearing polymeric composition such as RULON.

An annular cylindrical shaped axially elongated flange member 100 is secured to the outer periphery of lower support flange and extends upwardly therefrom being spaced radially outwardly from rubber springs 84. An annular spring seat member 102 is secured to the upper end of cylindrical flange portion 100 and operates to support one end of a helical coil spring 104. The other end of coil spring 104 is supported of a generally radially outwardly extending annular flange member 106 secured to the upper end of tubular member 74.

A resilient jounce cushion 109 is provided secured to the lower surface of flange portion 80 which cushion is engageable with flange portion 106. Jounce cushion 109 will operate to limit the maximum compression of coil spring 104 so as to prevent spring 104 from going solid which could result in premature failure thereof. It should be noted that when flange portion 106 engages jounce cushion 109, they will operate to effectively remove coil spring 104 from the strut circuit and transfer any further loading directly to rubber springs 84.

In order to dampen shock loading exerted on the strut assembly 10 as a result of road surface imperfections encountered by the vehicle wheel, a friction damping assembly 108 is provided positioned within tubular member 74. Friction damping assembly includes a lower coil spring 110 positioned substantially coaxially within tubular member 74 and surrounding tubular member 36 and having one end positioned in a polymeric composition spring seat 112 engaging end flange 68. The opposite end of coil spring 110 is seated within an annular groove 114 provided in a lower annular wedge support member 116 also positioned in coaxial relationship with tubular members 74 and 36. An upper annular wedge support member 118 is also provided having an annular recess 120 provided therein within which the lower end of tubular member 78 is seated. Both upper and lower wedge support members 116 and 118 are provided with opposed conical surfaces 122 and 124 each of which engages complementary shaped surfaces provided on opposite ends of a plurality of substantially identical damper shoes 128 positioned in circumferentially spaced relationship therebetween. As shown in FIGURE 2, the upper and lower conical surfaces of the damper shoes and hence the corresponding surfaces 122 and 124 define non-parallel conical planes, surface 124 of which lies in a plane forming a smaller included angle relative to the longitudinal axis than the conical plane defined by surface 122. Also, the radially outer surface 132 of each of the damper shoes 128 is convex shaped so as to provide a substantially maximum surface area of engagement with the sidewall of tubular member 74 so as to create the desired frictional drag.

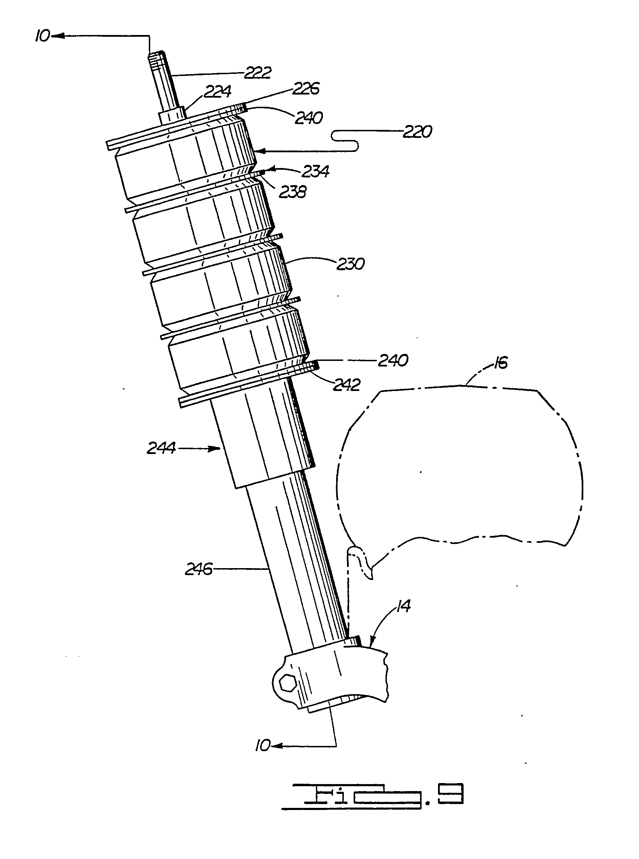

As previously mentioned, stud 22 is adapted to be secured to strut mounting provisions 20 associated with the vehicle body whereas the lower tubular member 74 will be fixedly secured to a vehicle wheel carrying axle assembly such as a steering knuckle 14 for example. Thus, in operation, when the vehicle wheel encounters an irregularity in the roadway, the force generated thereby will impact a vertically directed acceleration force on the tire 16 which will be transmitted through the axle assembly or steering knuckle 14 to the lower tubular member 74 secured thereto. Assuming the irregularity to be in the form of an upwardly vertical obstruction in the roadway so as to produce an upwardly vertically directed force which will then operate to compress strut assembly 10 by exerting a compressive loading on coil springs 110 and 104 and on rubber springs 84. As shown in the schematic diagram of FIGURE 4 wherein the schematically represented spring elements of the system have been indicated by the same reference numbers used to refer to the spring elements shown in FIGURE 2, rubber springs 84 are connected in series with coil springs 104 and 110 which in turn are connected in parallel with each other. Thus, substantially the full compressive loading will be exerted on rubber springs 84 whereas it will be split between coil springs 104 and 110. This compressive loading will effect an overall shortening of the axial length of strut 10 due to the upward telescopic movement of tubular member 36 into tubular member 28 and the relative downward telescopic movement of tubular member 28 and guide rod 34 into tubular members 78 and 36 respectively.

As mentioned above, coil spring 110 will operate to exert a compressive loading on lowered wedge support member 116 which loading will be opposed by the relative downward telescopic movement of tubular member 78 acting on the upper wedge support 118. Because of the relative difference in agulation of the surfaces 122 and 124 of upper and lower wedge supports 118 and 116 with the damping shoes 128, the forces acting thereon will operate to urge the radially outer sidewall surfaces of damping shoes 128 into engagement with the outer sidewall of tubular member 74 thereby creating a friction drag opposing the overall relative compressive movement of the strut. It should be noted that the amount of damping and hence the stiffness of strut 10 may be controlled by varying the angulation of surfaces 122 and 124 which in turn will control the resolution of compressive forces encountered by the strut and hence the forces urging the damping shoes 128 into engagement with tubular member 74. Thus, while coil springs 104 and 110 and rubber springs 84 will operate to absorb the forces exerting the compressive loading on strut 10, damping assembly 108 will operate to resist or damp the relative movement of the tubular members so as to limit sinusoidal movement thereof. It should be noted that while as described above an increase in the compressive loading on strut 10 is compressed, the relative angulation of surfaces 122 and 124 and the corresponding coacting surfaces 132 into engagement with the inner sidewall of tubular member 74 during extending movement of strut 10 such as when rebounding from the initial upward vertical force or should the wheel encounter a depression in the roadway. Thus, a desired frictional damping will be produced during both compression and extension of strut 10. Additionally, because as shown in FIGURE 2, damping shoes 128 engage the inner sidewall of tubular member 74, the outer wall of which is exposed to the environment, heat generated during operation thereof will be readily dissipated.

Additionally, as previously mentioned, jounce and rebound pads 109 and 54 respectively are also provided being engageable with flange portion 106 and bearing retainer 58 respectively, rebound pad 54 being operative to limit extreme suspension travel whereas jounce pad 109 operates to protect coil spring 104.

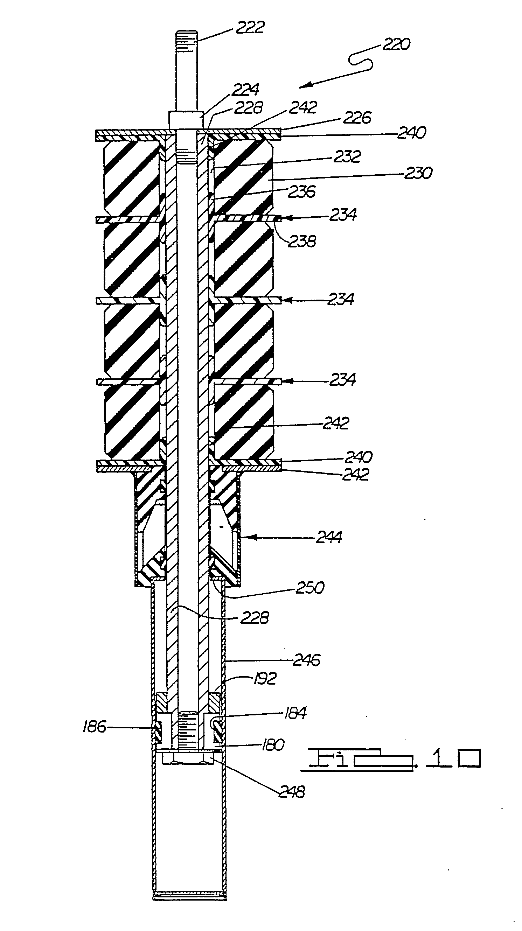

It should be noted that because rubber springs 84 inherently have a variable rate and thus operate to provide decreasing incremental deflection in response to increasing load as illustrated in the graph of FIGURE 5, it is possible for the strut assembly of the present invention to provide improved ride frequency at both lightly loaded and fully loaded vehicle conditions. The plot of deflection versus load for rubber springs shown in FIGURE 5 is to be considered exemplary only as it is possible to substantially alter the characteristics of this curve by controlling both geometry and materials used in fabrication of the rubber springs. Additionally, because the present invention utilizes friction damping in lieu of the hydraulic damping of prior struts which require rather complicated porting and valving arrangement substantially less high tolerance machining is required and hence the strut assembly of the present invention is substantially less costly to manufacture. Further, the elemination of the numerous seals required for hydraulic type damping offers both improved reliability and longevity. It should also be noted that because the strut of the present invention utilizes a substantial number of parts which may be easily fabricated by injection molding or the like, the need for performing costly machining operations is even further reduced over that required for other presently available strut assemblies.

Encountering of relatively small irregularities in the roadway may result in an insufficient force to overcome the static coefficient of friction of the engagement between damping shoes 128 and tubular member 74 in which case tubular members 74 and 78 will remain in a fixed position relative to each other and the forces will be transmitted therethrough to rubber springs 84. Thus, rubber springs 84 will operate to absorb these lower magnitude forces so as to insulate the vehicle body therefrom and the inherent self-damping characteristics thereof will operate to prevent excessive oscillation from occurring as a result thereof.

Referring now to FIGURE 6, there is illustrated another embodiment of the present invention indicated generally at 134. Like numbers primed have been used to identify components of strut 134 which are substantially identical to the corresponding components illustrated and described with reference to FIGURES 1 through 3 above and further description thereof has been omitted as being unnecessarily redundant.

In this embodiment, elongated hollow tubular member 28' is of a length substantially longer than tubular member 28 of strut 10 and is telescopically received within the lower tubular member 74'. A bearing 136 preferably of a suitable polymeric composition such as RULON is fitted to tubular member 28' adjacent the lower end thereof which slidingly engages the inner sidewall of the lower tubular member 74'. A threaded plug member 138 having an opening 140 extending therethrough is also fitted within the lower end of tubular member 28' which cooperates with a suitable rubber rebound pad 142 fitted to the upper end of a rebound rod 144 extending through opening 140 by means of a threaded fastener 146 to limit maximum extension of strut 134. The lower end 148 of rebound rod 144 is threaded into a second plug member 150 which is in turn threaded into the lower end 72' of the lower tubular member 74'. Plug 150 has a suitable jounce pad 152 fitted to the upper surface thereof which is also adapted to engage plug member 138. In this embodiment jounce pad 152 will operate to limit maximum compression of strut 134.

A generally cylindrical shaped depending flange member 154 is secured to the lower surface of radially extending flange 106' and is positioned in substantially concentric coaxial relationship with tubular member 28'. A plurality of reinforcing flanges 156 are also provided extending between the outer sidewall thereof and lower surface 158 of flange 106'. A generally radially outwardly extending flange portion 160 is secured to the upper end of the lower tubular member being of a diameter only slightly less than the inside diameter of cylindrical flange portion 154 and adapted to be movable thereinto.

An annular lower wedge support member 162 is supported on flange portion 154 and includes an upper conical surface 164 and a concave radially inwardly facing surface 166. A suitable bearing member 168 is fitted within an annular groove provided on concave surface 166 and slidingly engages the outer sidewall of tubular member 28' extending therethrough.

An annular upper wedge support member 168 is also provided seated against surface 158 of radially extending flange portion 106' and also has a concave radially inwardly facing surface 170 provided with an annular groove within which a suitable bearing member 172 is positioned which also engages the outer sidewall of tubular member 28'. Preferably both the outer sidewall surface of tubular member 28' and the inner sidewall surface of tubular member 74' will be suitably polished to prevent excessive wear of bearing members 136, 168 and 172.

A plurality of circumferentially spaced damping shoes 174 are positioned between upper and lower wedge supports and have a radially inwardly facing concave surface 176 adapted to be urged into engagement with outer sidewall of the tubular member 28' in response to increasing and decreasing compressive loading between upper and lower wedge support members resulting from wheel originating vertical loading on strut 134.

As illustrated schematically in FIGURE 7 in FIGURE 7, in this embodiment the coil spring, the rubber springs and the friction damping assembly are all arranged in series relationship. Thus, the rubber spring and coil spring each experience the same loading which loading will also operate to create a friction drag opposing relative movement of tubular members 28' and 74'.

Strut 134 offers similar advantages over conventional struts employing hydraulic damping and substantially constant or fixed rate coil springs as mentioned above with regard to strut 10. Further, strut 134 offers a simplified design over the embodiment of FIGURES 1—3 requiring fabrication and assembly of substantially fewer parts.

Referring now to FIGURE 8 of the drawings, there is illustrated yet another embodiment of the present invention indicated generally at 178. Strut 178 is substantially identical to the embodiment described with reference to FIGURES 6 and 7 except for the arrangement of the jounce and rebound stops. Accordingly, like portions have been indicated by like numbers double primed.

In this embodiment the lower hollow tubular member 74" is of substantially greater diameter than the upper tubular member 78" which extends concentrically thereinto. Accordingly, an enlarged annular bearing support member 180 is provided being seated on an undercut end portion of tubular member 28" and retained therein in a suitable manner such as by means of a split snap ring 182. A groove 184 is provided in the outer surface of bearing support member 180 within which a suitable bearing 186 preferably of a polymeric composition such as RULON is seated which slidingly engages the inner sidewall of tubular member 74".

The upper end of tubular member 74" has a radially inwardly extending flange member 188 secured thereto which is provided with a suitable opening 190 through which tubular member 28" projects. A resilient rebound pad 192, preferably of rubber, is secured to the lower surface of flange portion 188 and adapted to engage the axially upwardly facing surface 194 of bearing support member 180 so as to limit maximum extension of strut 178. In order to limit maximum compression of coil spring 104" a resilient jounce pad 196 is provided secured to the lower surface 198 of flange portion 80" and is engageable with lower flange portion 106". Operation of jounce pad 196 is substantially the same as that described above with respect to jounce pad 109.

In order to protect the polished exterior sidewall surface of tubular member 28", a flexible rubber or polymeric dust boot member 200 is provided extending between and secured to upper and lower flange portions respectively. A similar dust boot may also be fitted in like manner to the embodiment of FIGURE 6. Additionally, a suitable disc member 202 is also provided secured within the lower end of tubular member so as to close off the interior thereof and prevent entry of dirt or other contaminants.

The embodiment of FIGURE 8 thus provides an even further simplification of the strut design of the present invention and further reduces the number of parts required for assembly thereof by providing a modified jounce and rebound stop. The operation of strut 178 is substantially the same as that described above with regard to strut 134.

Referring now to FIGURES 9 and 10 of the drawings, there is illustrated a further embodiment of the present invention indicated generally by numeral 220. Strut suspension 220 is similar to strut 178 of FIGURE 8 of the drawings except that it represents a significant simplification of strut 178 so as to further reduce the number of components necessary to construct a strut suspension 220 while obtaining all of the quality characteristics desired and set forth hereinabove for strut 178. FIGURE 9 of the drawings shows the clearance envelope that would be found upon mounting of strut suspension 220 in an automobile and as set forth in FIGURE 9 is similar to the clearance areas provided as seen in FIGURE 1 of the drawings. However, it will be noticed that the outline of strut suspension 220 is somewhat different from the embodiments set forth in FIGURES 1 through 8 of the drawings.

Referring more particularly to FIGURE 10 of the drawings which represents a partial section view of the strut suspension 220, it can be amply seen that there is a threaded stud 222 similar to that found on the prior embodiments as set forth in the Figures as numeral 22. The threaded stud 222 carries an enlarged diameter collar portion 224 similar to 24 and also an annular flange 226 similar to 86 of the prior embodiments. These are supported by the threaded engagement of the threaded stud 222 in a first tubular member 228 which is similar to 28 of the prior embodiments. Of course those skilled in the art will realize that first tubular member 228 could be a solid cylinder as well as a hollow tube since it is the structural integrity and smooth or polished exterior surface that is useful in the present invention, not the fact that it is hollow.

This forms then an end structure for the support of a number of rubber springs 230 similar to rubber springs 84 of the prior embodiments. It can be amply seen from FIGURE 10 that the rubber springs 230 have a bore diameter of 232 such as to allow them to fit easily over the outside diameter of the first tubular member 228 with some room to spare. Several rubber springs 230 are placed on the first tubular member 228 with spacer elements 234 similar to elements 88 of the prior embodiments each of which include a relatively short axially extending cylindrical flange portion 236 surrounding and slidably engaging the first tubular member 228 and having an annular flange portion 238 integrally formed therewith extending radially outwardly intermediate the ends thereof and between adjacent rubber springs 230. Furthermore, upper and lower bearing elements 240 similar to bearing elements 90 of the prior embodiments also each have a cylindrical flange portion slidably engaging the first tubular member 228 and an integrally formed radially extending flange portion extending between the annular flange 226 at the top of the strut suspension 220 and the rubber springs 230. On the central portion of the strut member 220 the lower bearing element 240 rests upon a stop plate 242 wich provides the point of attachment for the friction damping assembly 244 similar to assembly 108 of the prior embodiments.

The friction damping assembly 244 is constructed in a manner very similar to that of strut 178 of FIGURE 8, the exceptions thereto being that the molded shapes of the polymeric materials are slightly different to accommodate the container portion of the friction damping assembly 244. Of course those skilled in the art will realize that the components of friction damping assembly 244 can be constructed of many different types of materials such as metals, polymeric materials or other materials that will provide the functional characteristics sought, mainly structural integrity and smooth exterior surfaces for mating with the other component parts of the friction damping assembly 244.

In this embodiment also, the second tubular member 246 is of substantially greater internal diameter than the first tubular member 228 which extends concentrically thereinto. Accordingly, an enlarged annular bearing support member 180 is provided on an undercut end portion of the first tubular member 228 and retained thereon in a suitable manner such as by means of a flanged bolt 248 or simply by means of a bolt and flat washer. A groove 184 is provided in the outer surface of the bearing support member 180 within which a suitable bearing 186 preferably of a polymeric composition such as RULON is seated which slidingly engages the inner sidewall of the second tubular member 246.

The upper end of second tubular member 246 has a radially inwardly extending flange 250 so as to neck down the second tubular member 246 to nearly the outside diameter of the first tubular member 228 such as to allow passage of the first tubular member 228 therethrough. A difference of this embodiment from strut 178 of FIGURE 8 is that the resilient rebound pad 192, preferably of rubber or some resilient material is secured to the upper portion of the bearing support member 180 instead of to the lower surface of flange 250.

In this manner, it can be quickly seen by those skilled in the art, that the polished exterior sidewall surface of first tubular member 228 and the interior surface of second tubular member 246 are completely enclosed so as to not require additional components to prevent dust from entering the polished areas. Furthermore, strut suspension 220 provides significantly further simplification of the strut design of strut 178 of FIGURE 8 by reducing the number of parts required for the assembly and providing for exteriorly polished components to reduce work process time in producing components for the assembly of strut suspension 220.

It should also be noted that the strut of the present invention has been designed to provide a direct replacement for other types of struts. The present invention thus offers a substantially less costly alternative to conventional hydraulically damped struts as well as additional advantages in that it is possible to more closely approximate the optimum vehicle ride frequency over the entire range of vehicle loading due to the use of rubber springs having an inherent variable rate.

While it will be apparent that the preferred embodiments of the invention disclosed are well calculated to provide the advantages and features above stated, it will be appreciated that the invention is susceptible to modification, variation and change without departing from the proper scope or fair meaning of the subjoined claims.

**Claims**

1. A suspension strut (10; 134; 178; 220) for a vehicle suspension system, comprising an elongated load-bearing assembly (28, 34, 36; 28', 34', 36'; 28"), arranged to extend and contract reciprocatively along its longitudinal axis from a design position toward a rebound position and a jounce position, respectively, and resilient means (84, 104; 84', 104'; 84", 104"; 230) surrounding the load-bearing assembly (28, 34, 36; 28', 34', 36'; 28") and acting between sprung and unsprung parts of the suspension system, characterised in that the resilient means (84; 84'; 84"; 230) provide a variable rate resilient force, for supporting the load-bearing assembly, and that a frictional damping assembly (108; 244) including damping means (110, 116, 118; 162, 168) and operator means (78) surrounding the load-bearing assembly are provided, wherein the operator means are arranged to receive a resilient force from the resilient means (84; 84'; 84"; 230) and apply a component of that resilient force to the damping means (110, 116, 118; 162, 168) as a normal force urging the damping means inwardly into contact with the load-bearing assembly, so as to apply a frictional damping force to the load-bearing assembly during extension and contraction thereof.

2. A strut as claimed in claim 1, wherein the resilient means include one or more coil springs (104; 104'; 104").

3. A strut as claimed in claim 1 or 2, wherein the resilient means include one or more elastomeric springs (84; 84'; 84"; 230).

4. A strut as claimed in claim 3, wherein the one or more elastomeric springs and the one or more coil springs are compressible in series.

5. A strut as claimed in claim 1, 2, 3 or 4, wherein jounce stop means (109; 152; 196) are secured to the load-bearing assembly.

6. A strut as claimed in claims 4 and 5, wherein the jounce stop means are arranged to limit maximum compressive movement of the one or more coil springs (104, 104', 104").

7. A strut as claimed in claim 3 or 4, wherein a plurality of the elastomeric springs are positioned in a stacked relationship.

8. A strut as claimed in claim 7, wherein the resilient means (84, 104; 84', 104'; 84", 104"; 230) further include low-friction bearing members (88, 90; 88', 90'; 88", 90"; 234, 240) positioned between adjacent ones of the elastomeric springs and operative to facilitate relative movement therebetween, each of the bearing members further including an axially-extending portion (92, 94; 92', 94'; 92", 94"; 236, 242) engageable with the outer sidewall of the load-bearing assembly (28; 28'; 28") and operative to facilitate relative movement between the elastomeric springs and the load-bearing assembly.

9. A strut as claimed in any preceding claim, including rebound stop means (54; 142; 192) for limiting extension of the load-bearing assembly.

10. A strut as claimed in claim 4, 5, 6 or 7, wherein the load-bearing assembly includes a first elongated tubular member (28; 28'; 28"; 228) extending through the elastomeric springs (84; 84'; 84"; 230) and having support means (86; 86'; 86"; 226) engaging one end of the elastomeric spring means, and a second elongated tubular member (36; 36'; 74"; 246) disposed in substantially coaxial relationship with the first tubular member and telescopically movable with respect thereto.

11. A strut as claimed in claim 10, including means (80, 100; 80', 100'; 80", 100") connected to the other end of the elastomeric springs for supporting one end of the coil spring (104; 104'; 104"), which is positioned substantially coaxially with the elastomeric springs.

12. A strut as claimed in claim 11, wherein the other end of the coil spring (104; 104'; 104") is operatively connected to the second tubular member.

13. A strut as claimed in claim 10, 11 or 12, wherein the elastomeric springs are axially movable with respect to the first tubular member.

14. A strut as claimed in claim 10, 11, 12 or 13, wherein bearing means (48, 50) are secured to the other end of the second tubular member and are engageable with a sidewall surface of the first tubular member, so as to guide telescopic movement therebetween.

15. A strut as claimed in claim 14, wherein second bearing means (40, 42) are secured to one end of the first tubular member and are engageable with a sidewall surface of the second tubular member, so as to guide telescopic movement therebetween, the second bearing means (40, 42) including rebound stop means (54) secured to an axially-facing surface (58) thereof and engageable with the first bearing means (48, 50) so as to limit maximum extension of the strut (10).

16. A strut as claimed in any preceding claim, wherein the operator means include first and second relatively-movable annular members (116, 118; 162, 168; 162", 168") surrounding the load-bearing assembly and the damping means include a plurality of damping shoes (128; 174; 174") movably positioned between the first and second relatively-movable members, compressive loading on the strut (10; 134; 178; 220) being operative to urge the first and second members in a converging direction, whereby the damping shoes are urged inwards into contact with the load-bearing assembly.

17. A strut as claimed in claim 16, wherein each of the first and second annular members (116, 118; 162, 168; 162", 168") has a generally conical surface (122, 124) engageable with a complementarily-shaped surface on each of the damping shoes (128; 174; 174").

18. A strut as claimed in claim 17, wherein each surface is so inclined with respect to the longitudinal axis that the magnitude of the frictional damping force varies, depending upon whether the load-bearing assembly is moving toward its rebound position or its jounce position.

19. A strut as claimed in claim 16, 17 or 18, wherein generally radially-extending means (188) project from one end of the second tubular member and engage one of the first and second annular members.

20. A strut as claimed in claim 19, wherein an elongated generally-cylindrical member (154") surrounds the first tubular member and the first and second annular members are positioned within it.

21. A strut as claimed in claim 20, wherein the other end of the generally cylindrical member (154") is open and telescopically receives one end of the second tubular member.

22. A strut as claimed in claim 20 or 21, wherein the generally cylindrical member (154") includes radially-extending means (158") projecting from one end thereof and engaging the other (168") of the first and second annular members.

23. A strut as claimed in claim 22, wherein first and second annular members (162", 168") are operative to urge each of the damping shoes (174") into engagement with an outer sidewall surface of the first tubular member (86") in response to compressive forces exerted between the radially-extending means (158") projecting from one end of the second tubular member and from one end of the cylindrical member (154").

24. A strut as claimed in any preceding claim, wherein the load-bearing assembly includes a first elongated tubular member (28; 28'; 28") having means (20) for securing one end (18) thereof to a portion of a motor vehicle to be supported by the suspension strut (10) and a second tubular member (36; 36'; 36") movably positioned in telescopic relationship with the first tubular member and having one end (12) secured to a road-engaging portion (16) of the motor vehicle, the first tubular member extending through a bore (32) in the resilient means, support means (104) secured to one end of the first tubular member for supporting one end of the resilient means and further support means (106) secured to the second tubular member and supportingly engaging the resilient means.

25. A strut as claimed in claims 2 and 3 or any of claims 4 to 24 as dependent thereon, wherein the frictional damping means (110, 116, 118; 162, 168) are connected in series operating relationship with the elastomeric springs (84; 84'; 84"; 230) and the coil springs (104; 104'; 104").

26. A strut as claimed in claims 2 and 3 or any of claims 4 to 24 as dependent thereon, wherein the frictional damping means (110, 116, 118; 162, 168) are connected in parallel operating relationship with the coil springs (104; 104'; 104") and in series operating relationship with the elastomeric springs (84; 84'; 84"; 230).

## Patentansprüche

1. Federbein (10; 134; 178; 220) für eine Fahrzeugradaufhängung mit einer langgestreckten lasttragenden Anordnung (28, 34, 36; 28', 34', 36', 28"), die längs ihrer Achse aus einer Entwurfsstellung zu einer ausgefederten Stellung und zu einer eingefederten Stellung hin aus- bzw. einziehbar ist, und mit elastischen Mitteln (84, 104; 84', 104'; 84", 104"; 230), die die lasttragende Anordnung (28, 34, 36; 28', 34', 36'; 28") umgeben und zwischen gefederten und ungefederten Teilen der Radaufhängung wirksam sind, dadurch gekennzeichnet, daß die elastischen Mittel (84, 84'; 84"; 230) zum Stützen der lasttragenden Anordnung eine elastische Kraft mit veränderbarer Rate ausüben und daß eine Reibungsdämpfungsanordnung (108; 244) mit einer Dämpfungseinrichtung (110, 116, 118; 162, 168) vorgesehen ist, sowie eine die lasttragende Anordnung umgebende Betätigungseinrichtung (78), die von den elastischen Mitteln (84, 84'; 84"; 230) mit einer elastischen Kraft beaufschlagbar und geeignet ist, auf die Dämpfungsmittel (110, 116, 118; 162, 168) eine Komponente dieser elastischen Kraft als eine Normalkraft auszuüben, die trachtet, die Dämpfungseinrichtung bis zur Berührung mit der lasttragenden Anordnung einwärtszubewegen, so daß auf die lasttragende Anordnung während des Aus- und Einziehens derselben eine Reibungsdämpfungskraft ausgeübt wird.

2. Federbein nach Anspruch 1, dadurch gekennzeichnet, daß die elastischen Mittel eine oder mehrere Schraubenfedern (104; 104'; 104") umfassen.

3. Federbein nach Anspruch 1 oder 2, dadurch gekennzeichnet, daß die elastischen Mittel eine oder mehrere elastomere Federn (84; 84'; 84"; 230) umfassen.

4. Federbein nach Anspruch 3, dadurch gekennzeichnet, daß die eine oder mehreren elastomeren Federn und die eine oder mehreren Schraubenfedern hintereinander zusammendrückbar sind.

5. Federbein nach Anspruch 1, 2, 3 oder 4, dadurch gekennzeichnet, daß an der lasttragenden Anordnung Anschlagmittel (109; 152; 196) zum Begrenzen des Einfederns befestigt sind.

6. Federbein nach Anspruch 4 und 5, dadurch gekennzeichnet, daß die das Einfedern begrenzenden Anschlagmittel die Kompressionsbewegung der einen oder mehreren Schraubenfedern (104, 104', 104") begrenzen.

7. Federbein nach Anspruch 3 oder 4, dadurch gekennzeichnet, daß eine Mehrzahl der elastomeren Federn in einer gestapelten Anordnung vorgesehen ist.

8. Federbein nach Anspruch 7, dadurch gekennzeichnet, daß die elastischen Mittel (84, 104; 84', 104'; 84", 104"; 230) ferner reibungsarme Lagerelemente (88, 90; 88', 90'; 88", 90", 234, 240) besitzen, die zwischen einander benachbarten elastomeren Federn angeordnet sind und deren Relativbewegung erleichtern, und daß jedes der Lagerelemente einen axialen Teil (92, 94; 92', 94'; 92", 94"; 236, 242) besitzt, der geeignet ist, an der äußeren Seitenwand der lasttragenden Anordnung (28; 28'; 28") anzugreifen und der die Relativbewegung zwischen den elastomeren Federn und der lasttragenden Anordnung erleichtert.

9. Federbein nach einem der vorhergehenden Ansprüche, gekennzeichnet durch das Ausfedern begrenzende Anschlagmittel (54; 142; 192) zum Begrenzen des Ausziehens der lasttragenden Anordnung.

10. Federbein nach Anspruch 4, 5, 6 oder 7, dadurch gekennzeichnet, daß die lasttragende Anordnung ein erstes langgestrecktes Rohrstück (28; 28'; 28"; 228) besitzt, das die elastomeren Federn (84; 84'; 84"; 230) durchsetzt und mit Stützmitteln (86; 86'; 86"; 226) versehen ist, die am einen Ende der elastomeren Federmittel angreifen, und ein zweites langgestrecktes Rohrstück (36; 36'; 74"; 246), das im wesentlichen koaxial zu dem ersten Rohrstück angeordnet und relativ zu ihm teleskopartig bewegbar ist.

11. Federbein nach Anspruch 10, gekennzeichnet durch mit dem anderen Ende der elastomeren Federn verbundene Mittel (80, 100; 80', 100'; 80", 100") zum Abstützen der zu den elastomeren Federn im wesentlichen koaxialen Schraubenfeder (104; 104'; 104") am einen Ende derselben.

12. Federbein nach Anspruch 11, dadurch gekennzeichnet, daß die Schraubenfeder (104; 104'; 104") an ihrem anderen Ende mit dem zweiten Rohrstück wirkungsverbunden ist.

13. Federbein nach Anspruch 10, 11 oder 12, dadurch gekennzeichnet, daß die elastomeren Federn gegenüber dem ersten Rohrstück axialbewegbar sind.

14. Federbein nach Anspruch 10, 11, 12 oder 13, dadurch gekennzeichnet, daß am anderen Ende des zweiten Rohrstückes Lagermittel (48, 50) befestigt sind, die geeignet sind, an der Seitenwandung des ersten Rohrstückes anzugreifen und die teleskopartige Bewegung zwischen ihnen zu führen.

15. Federbein nach Anspruch 14, dadurch gekennzeichnet, daß an einem Ende des ersten Rohrstückes zweite Lagermittel (40, 42) befestigt sind, die geeignet sind, an einer Seitenwandung des zweiten Rohrstückes anzugreifen und die Teleskopbewegung zwischen ihnen zu führen, und daß die zweiten Lagermittel (40, 42) das Ausfedern begrenzende Anschlagmittel (54) besitzen, die an einer in einer axialen Richtung weisenden Fläche (58) der zweiten Lagermittel befestigt und geeignet sind, an den ersten Lagermitteln (48, 50) anzugreifen, um das Ausziehen des Federbeins (10) zu begrenzen.

16. Federbein nach einem der vorhergehenden Ansprüche, dadurch gekennzeichnet, daß die Betätigungseinrichtung einen ersten und einen zweiten Ring (116, 118; 162, 168; 162", 168") besitzt, die relativ zueinander bewegbar sind und die lasttragende Anordnung umgeben, daß die Dämpfungsmittel mehrere Dämpfungsbacken (128; 174; 174") besitzen, die zwischen dem ersten und dem zweiten der relativ zueinander bewegbaren Ringe bewegbar angeordnet sind, und daß eine Druckbelastung des Federbeins (10; 134; 178; 220) eine Bewegung des ersten und des zweiten Ringes in einer konvergierenden Richtung bewirkt, so daß die Dämpfungsbacken bis zur Berührung mit der lasttragenden Anordnung einwärtsbewegt werden.

17. Federbein nach Anspruch 16, dadurch gekennzeichnet, daß sowohl der erste als auch der zweite Ring (116, 118; 162, 168; 162", 168") eine allgemein konische Fläche (122, 124) besitzt, die geeignet ist, an einer zu ihr komplementären Fläche je einer der Dämpfungsbacken (128; 174; 174") anzugreifen.

18. Federbein nach Anspruch 17, dadurch gekennzeichnet, daß jede Fläche gegenüber der Längsachse derart geneigt ist, daß die Reibungsdämpfungskraft unterschiedliche Werte hat, wenn sich die lasttragende Anordnung zu ihrer ausgefederten bzw. zu ihrer eingefederten Stellung hinbewegt.

19. Federbein nach Anspruch 16, 17 oder 18, dadurch gekennzeichnet, daß von einem Ende des zweiten Rohrstückes Mittel (188) vorstehen, die sich allgemein radial erstrecken und an dem ersten oder dem zweiten Ring angreifen.

20. Federbein nach Anspruch 19, dadurch gekennzeichnet, daß das erste Rohrstück von einem allgemein zylindrischen, langgestreckten Glied (154") umgeben ist, in dem der erste und der zweite Ring angeordnet sind.

21. Federbein nach Anspruch 20, dadurch gekennzeichnet, daß das allgemein zylindrische Glied (154") am anderen Ende offen ist und dort ein Ende des zweiten Rohrstückes teleskopartig aufnimmt.

22. Federbein nach Anspruch 20 oder 21, dadurch gekennzeichnet, daß das allgemein zylindrische Glied (154") Mittel (158") besitzt, die sich radial erstrecken, vom einen Ende des allgemein zylindrischen Gliedes vorstehen und an dem zweiten bzw. ersten Ring (168") angreifen.

23. Federbein nach Anspruch 22, dadurch gekennzeichnet, daß unter der Einwirkung von Druckkräften, die zwischen den von dem einen Ende des zweiten Rohrstückes und von dem einen Ende des zylindrischen Gliedes (154") vorstehenden, sich radial erstreckenden Mitteln (158") ausgeübt werden, der erste und der zweite Ring (162; 168") trachten, jede der Dämpfungsbacken (174") zum Angriff an einer äußeren Seitenwandung des ersten Rohrstückes (86") zu bewegen.

24. Federbein nach einem der vorhergehenden Ansprüche, dadurch gekennzeichnet, daß die lasttragende Anordnung ein erstes langgestrecktes Rohrstück (28; 28'; 28") besitzt, das mit Mitteln (20) zum Befestigen eines Endes (18) des Rohrstückes an einem von dem Federbein (10) abzustützenden Teil eines Kraftfahrzeuges versehen ist, und ein zweites Rohrstück (36; 36'; 36"), das in dem ersten Rohrstück teleskopartig angeordnet und mit einem Ende an einem an der Fahrbahn angreifenden Teil (16) des Kraftfahrzeuges befestigt ist, wobei das erste Rohrstück eine Bohrung (32) der elastischen Mittel durchsetzt, an einem Ende des ersten Rohrstückes eine Stützeinrichtung (104) zum Abstützen der elastischen Mittel am einen Ende derselben befestigt ist und an dem zweiten Rohrstück eine weitere Stützeinrichtung (106) befestigt ist, die an den elastischen Mitteln abstützend angreift.

25. Federbein nach Anspruch 2 und 3 oder einem der darauf rückbezogenen Ansprüche 4 bis 24, dadurch gekennzeichnet, daß die Reibungsdämpfungsmittel (110, 116, 118; 162, 168) mit den elastomeren Federn (84; 84'; 84"; 230) und den Schraubenfedern (104; 104'; 104") wirkungsmäßig hintereinandergeschaltet sind.

26. Federbein nach Anspruch 2 und 3 oder einem der darauf rückbezogenen Ansprüche 4 bis 24, dadurch gekennzeichnet, daß die Reibungsdämpfungsmittel (110, 116, 118; 162, 168) wirkungsmäßig den Schraubenfedern (104; 104'; 104") parallel und mit den elastomeren Federn (84; 84'; 84"; 230) hintereinandergeschaltet sind.

**Revendications**

1. Jambe élastique de suspension (10; 134; 178; 220) destinée à une suspension de véhicule, comprenant un ensemble allongé de support de charge (28, 37, 36; 28', 34', 36'; 28") disposé afin qu'il s'allonge et se contracte alternativement en translation suivant son axe longitudinal, d'une position nominale vers une position de rebond et une position de décollement respectivement, et un dispositif élastique (84, 104; 84', 104'; 84", 104"; 230) entourant l'ensemble de support de charge (28, 34, 36; 28', 34', 36'; 28") et agissant entre les parties suspendue et non suspendue de la suspension, caractérisée en ce que:

le dispositif élastique (84; 84'; 84"; 230) exerce une force d'élasticité correspondant à une constante élastique variable, destinée au support de l'ensemble de support de charge, et en ce qu'un ensemble d'amortissement par friction (108, 244) comprenant un dispositif d'amortissement (110, 116, 118; 162, 168) et un dispositif de manoeuvre (78) entourant l'ensemble de support de charge, sont présents, le dispositif de manoeuvre étant disposé afin qu'il reçoive une force élastique appliquée par le dispositif élastique (84; 84'; 84"; 230) et applique une composante de cette force élastique au dispositif d'amortissement (110, 116, 118; 162, 168) sous forme d'une force normale repoussant le dispositif d'amortissement vers l'intérieur au contact de l'ensemble de support de force, afin qu'une force d'amortissement par friction soit appliquée à l'ensemble de support de charge pendant son allongement et sa contraction.

2. Jambe élastique selon la revendication 1, dans laquelle le dispositif élastique comporte un ou plusieurs ressorts hélicoïdaux (104; 104'; 104").

3. Jambe élastique selon l'une des revendications 1 et 2, dans laquelle le dispositif élastique comporte un ou plusieurs ressorts élastomères (84; 84'; 84"; 230).

4. Jambe élastique selon la revendication 3, dans laquelle un ou plusieurs ressorts élastomères et le ou les ressorts hélicoïdaux peuvent être comprimés en série.

5. Jambe élastique selon l'une quelconque des revendications 1 à 4, dans laquelle une butée de décollement (109; 152; 196) est fixée à l'ensemble de support de charge.

6. Jambe élastique selon l'une des revendications 4 et 5, dans laquelle la butée de décollement est destiné à limiter la compression maximale du ressort ou des ressorts hélicoïdaux (104, 104', 104").

7. Jambe élastique selon l'une des revendications 3 et 4, dans laquelle plusieurs ressorts élastomères sont disposés sous forme empilée.

8. Jambe élastique selon la revendication 7, dans laquelle le dispositif élastique (84, 104; 84', 104'; 84", 104"; 230) comporte en outre des coussinets à faible coefficient de frottement (88, 90; 88', 90'; 88", 90"; 234, 240) placés entre les ressorts élastomères adjacents et destinés à faciliter leur déplacement relatif, chaque coussinet comprenant en outre une partie disposée axialement (92, 94; 92', 94'; 92", 94"; 236, 242) destinée à coopérer avec la paroi latérale externe de l'ensemble de support de charge (28; 28'; 28") et destinée à faciliter le déplacement relatif des ressorts élastomères et de l'ensemble de support de charge.

9. Jambe élastique selon l'une quelconque des revendications précédentes, caractérisée en ce qu'elle comprend une butée de rebond (54; 142; 192) destinée à limiter l'allongement de l'ensemble de support de charge.

10. Jambe élastique selon l'une quelconque des revendications 4 à 7, dans laquelle l'ensemble de support de charge comporte un premier organe tubulaire allongé (28; 28'; 28"; 228) passant dans les ressorts élastomères (84; 84'; 84"; 230) et ayant un dispositif de support (86; 86'; 86"; 226) coopérant avec une première extrémité des ressorts élastomères et un second organe tubulaire allongé (36; 36'; 74"; 246) disposé coaxialement par rapport au premier organe tubulaire et mobile télescopiquement par rapport à lui.

11. Jambe élastique selon la revendication 10, comprenant un dispositif (80, 100; 80', 100'; 80", 100") raccordé à l'autre extrémité des ressorts élastomères et destiné à supporter une première extrémité du ressort hélicoïdal (104; 104'; 104"), placé en position sensiblement coaxiale aux ressorts élastomères.

12. Jambe élastique selon la revendication 11, dans laquelle l'autre extrémité du ressort hélicoïdal (104; 104'; 104") est raccordé au second organe tubulaire.

13. Jambe élastique selon l'une quelconque des revendications 10 à 12, dans laquelle les ressorts élastomères sont mobiles axialement par rapport au premier organe tubulaire.

14. Jambe élastique selon l'une quelconque des revendications 10 à 13 dans laquelle des coussinets (48, 50) sont fixés à l'autre extrémité du second organe tubulaire et sont destinés à coopérer avec une surface de paroi latérale du premier organe tubulaire afin que leur mouvement télescopique mutuel soit guidé.

15. Jambe élastique selon la revendication 14, dans laquelle des seconds coussinets (40, 42) sont fixés à une première extrémité du premier organe tubulaire et sont destinés à coopérer avec une surface de paroi latérale du second organe tubulaire afin que leur mouvement télescopique mutuel soit guidé, les seconds coussinets (40, 42) comprenant des butées de rebond (54) fixées à une surface (58) tournée axialement et destinées à coopérer avec les premiers coussinets (48, 50) afin que l'allongement maximal de la jambe (10) soit limité.

16. Jambe élastique selon l'une quelconque des revendications précédentes, dans laquelle le dispositif de manoeuvre comporte un premier et un second organe annulaire (116, 118; 162, 168; 162", 168") mobiles l'un par rapport à l'autre et entourant l'ensemble de support de charge et le dispositif d'amortissement comprend plusieurs patins d'amortissement (128; 174; 174") disposés de façon mobile entre le premier et le second organe mobile l'un par rapport à l'autre, une force de compression appliquée à la jambe (10; 134; 178; 220) repoussant le premier et le second organe en direction de convergence, si bien que les patins d'amortissement sont repoussés vers l'intérieur au contact de l'ensemble de support de charge.

17. Jambe élastique selon la revendication 16, dans laquelle chacun des premier et second organe annulaire (116, 118; 162, 168; 162", 168") a une surface de forme générale conique (122, 124) destinée à coopérer avec une surface de forme complémentaire de chacun des patins d'amortissement (128; 174; 174").

18. Jambe élastique selon la revendication 17, dans laquelle chaque surface a une inclinaison par rapport à l'axe longitudinal telle que l'amplitude de la force d'amortissement par friction varie selon que l'ensemble de support de force se déplace vers sa position de rebond ou vers sa position de décollement.

19. Jambe élastique selon l'une quelconque des revendications 16 à 18, dans laquelle un dispositif disposé de façon générale en direction radiale (188) dépasse d'une première extrémité du second organe tubulaire et est au contact de l'un des premier et second organes annulaires.

20. Jambe élastique selon la revendication 19, dans laquelle un organe allongé de forme générale cylindrique (154") entoure le premier organe tubulaire, et le premier et le second organe tubulaire sont placés à l'intérieur.

21. Jambe élastique selon la revendication 20, dans laquelle l'autre extrémité de l'organe de forme générale cylindrique (154") est ouverte et loge télescopiquement une première extrémité du second organe tubulaire.

22. Jambe élastique selon l'une des revendications 20 et 21, dans laquelle l'organe de forme générale cylindrique (150") comporte un dispositif disposé radialement (158") dépassant d'une première extrémité et coopérant avec l'autre (168") des premier et second organes annulaires.

23. Jambe élastique selon la revendication 22, dans laquelle le premier et le second organe annulaire (162", 168") assurent le rappel de chaque patin d'amortissement (174") au contact d'une surface externe de paroi latérale du premier organe tubulaire (86") sous l'action des forces de compression appliquées entre les dispositifs dirigés radialement (158") dépassant d'une première extrémité du second organe tubulaire et d'une première extrémité de l'organe cylindrique (154").

24. Jambe élastique selon l'une quelconque des revendications précédentes, dans laquelle l'ensemble de support de charge comprend un premier organe tubulaire allongé (28; 28'; 29") comprenant un dispositif (20) de fixation d'une première extrémité (18) de celui-ci à une partie d'un véhicule à moteur qui doit être supportée par la jambe élastique (10) de suspension et un second organe tubulaire (36; 36'; 36") disposé de façon mobile et télescopique par rapport au premier organe tubulaire et ayant une première extrémité (12) fixée à la partie (16) du véhicule destinée à être au contact d'une route, le premier organe tubulaire passant dans un trou (32) formé dans le dispositif élastique, un dispositif de support (104) fixé à une première extrémité du premier organe tubulaire et destiné à supporter une première extrémité du dispositif élastique et un dispositif supplémentaire de support (106) fixé au second organe tubulaire et supportant le dispositif élastique.

25. Jambe élastique selon l'une des revendications 2 et 3 ou l'une quelconque des revendications 4 à 24 lorsqu'elles dépendent de l'une des revendications 2 et 3, dans laquelle le dispositif d'amortissement par friction (110, 116, 118; 162, 168) est monté en série avec les ressorts élastomères (84; 84'; 84"; 230) et les ressorts hélicoïdaux (104; 104'; 104").

26. Jambe élastique selon l'une des revendications 2 et 3 ou l'une quelconque des revendications 4 à 24 lorsqu'elles dépendent de l'une des revendications 2 et 3, dans laquelle le dispositif d'amortissement par friction (110, 116, 118; 162, 168) est monté en parallèle avec les ressorts hélicoïdaux (104; 104'; 104") et en série avec les ressorts élastomères (84; 84'; 84"; 230).

0 058 043

FIG. 1.

FIG. 4.

S.M. — 20

1

0 058 043

FIG. 2.

FIG. 3.

FIG. 6.

0 058 043

FIG. 8.

Rubber Spring
Coil Spring
Load
Deflection

FIG. 9.

S.M.

FIG. 7.

3

FIG.9

FIG. 10